(19) Europäisches Patentamt
European Patent Office
Office européen des brevets

(11) EP 0 761 784 B1

# (12) EUROPÄISCHE PATENTSCHRIFT

(45) Veröffentlichungstag und Bekanntmachung des Hinweises auf die Patenterteilung:
**07.04.1999 Patentblatt 1999/14**

(51) Int Cl.[6]: **C09D 11/10**

(21) Anmeldenummer: **96113890.6**

(22) Anmeldetag: **30.08.1996**

## (54) Strahlenhärtende Druckfarben mit verbesserter Kratzfestigkeit und Gleitfähigkeit

Radiation curable printing ink with improved scratch resistance and gliding properties

Encre d'imprimerie durcissable par irradiation avec une résistance à l'abrasion améliorée et l'aptitude au glissement

(84) Benannte Vertragsstaaten:
**AT BE CH DE DK ES FI FR GB GR IE IT LI LU NL PT SE**

(30) Priorität: **07.09.1995 DE 19533062**

(43) Veröffentlichungstag der Anmeldung:
**12.03.1997 Patentblatt 1997/11**

(73) Patentinhaber: **Th. Goldschmidt AG**
**45127 Essen (DE)**

(72) Erfinder:
- **Ebbrecht, Thomas, Dr.**
  **58455 Witten (DE)**
- **Feldmann-Krane, Georg, Dr.**
  **45470 Mülheim/Ruhr (DE)**
- **Lersch, Peter, Dr.**
  **Midlothian, Virginia 23113 (US)**
- **Silber, Stefan, Dr.**
  **47804 Krefeld (DE)**

(56) Entgegenhaltungen:
**EP-A- 0 588 533** **EP-A- 0 588 534**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 761 784 B1

## Beschreibung

Die Erfindung betrifft strahlenhärtende Druckfarben, die Acrylatgruppen aufweisende Siloxane enthalten. Diese Druckfarben besitzen neben guten Release-Eigenschaften eine verbesserte Kratzfestigkeit und erhöhte Gleitfähigkeit.

Keine Emissionen, geringe Investitionen und niedrigerer Energiebedarf durch kurze Trockenanlagen, hohe Produktionszahlen dank schneller Härtung und in vielen Fällen eine bessere Qualität der Beschichtung, vor allem hinsichtlich Glanz und Abriebfestigkeit, sind die Gründe dafür, daß auf dem Gebiet der Industrielacke die Strahlenhärtung die expansivste Applikationsform darstellt.

Strahlenhärtende Druckfarben sind bekannt und beispielsweise in "UV & EB curing formulation for printing inks, coatings & paints" (R. Holman, P. Oldring, London 1988) beschrieben.

Ihre Eigenschaften sind ursächlich mit den zugrunde liegenden Oligomeren verknüpft. Dabei basieren die meisten der kommerziell erhältlichen Oligomeren, die in strahlenhärtenden (UV/EB) Systemen Anwendung finden, auf modifizierten Acrylaten. Hauptbindemittel (30 bis 95 Gew.-%, bezogen auf Lackrezeptur) sind oligomere Acrylesterverbindungen auf Basis von Polyethern, Polyestern, Epoxidharzen oder Polyurethanen. Die mittleren Molmassen liegen üblicherweise im Bereich von 200 bis 4000 g/Mol. Durch den Zusatz (0 bis 50 Gew.-%) niedrigviskoser mono- oder multifunktioneller Monomere, wie z. B. Hexandioldiacrylat, Tripropylenglycoldiacrylat, Trimethylolpropantriacrylat usw., die als Reaktivverdünner dienen, wird gegebenenfalls auf die gewünschte Verarbeitungsviskosität eingestellt.

Die vor allem für Papierbeschichtungen häufig verwendeten Epoxyacrylate werden aufgrund der raschen Härtung sowie der erzielbaren Härte und Chemikalienbeständigkeit geschätzt. Für hochwertige Beschichtungen werden auch Urethanacrylate eingesetzt, die neben einer verbesserten Flexibilität insbesondere ein ausgezeichnetes Benetzungsverhalten sowie Chemikalienresistenz und Härte bedingen.

Durch die Verwendung von Polyetheracrylaten kann hingegen leichter eine gewünschte niedrigere Verarbeitungsviskosität erreicht werden. Allerdings müssen hier Einbußen hinsichtlich der obengenannten Eigenschaften akzeptiert werden.

Der Härtungsmechanismus stellt eine strahlungsinduzierte, radikalische Polymerisation dar. Im Falle der UV-Härtung wird die Polymerisation durch die Photoreaktion eines oder mehrerer Initiatoren (0,3 bis 10 Gew.-%) eingeleitet. Beispiele solcher Photoinitiatoren sind Acylphosphinoxid-, Acetophenon- oder Benzophenonderivate sowie Thioxanthone. Zur Beschleunigung werden manchmal Aminderivate als Synergisten zugesetzt. Weitere Rezepturbestandteile sind ein oder mehrere Pigmente. Die Pigmentierungshöhen (0,1 bis 30 Gew.-%) hängen insbesondere von der jeweiligen Pigmenttype ab. Als weitere Additive werden bisweilen Entlüfter sowie Dispergierhilfsmittel verwendet.

Ein wichtiges Einsatzgebiet neben der holzverarbeitenden Industrie sind Druckfarben für Papier, wie sie zum Beispiel für das Bedrucken von Schallplattenhüllen, Buchdeckeln, Ansichts- und Kunststoffpostkarten sowie hochwertigen Katalogen verwendet werden. Bei der industriellen Herstellung dieser Druckerzeugnisse bereitet die Handhabung dieser Gegenstände Schwierigkeiten. So ist es nicht immer zu vermeiden, daß die nach der durch Strahlung induzierten Aushärtung der Farbe gestapelten Elemente Schäden an der Oberfläche erleiden.

Bei der Herstellung bedruckter Verpackungsmaterialien ist darüber hinaus eine rasche Release-Wirkung der Druckfarbe wünschenswert, so daß kurz nach dem Druckvorgang aufgebrachte Etiketten oder Codierungen zu einem späteren Zeitpunkt ohne Beschädigung des Druckbildes wieder entfernt werden können.

Man hat bereits versucht, die Handhabbarkeit frisch gedruckter Gegenstände dadurch zu verbessern, daß man der Druckfarbe reibungsmindernde Zusätze, wie Öle oder Wachse (z. B. Polyethylen- oder Polytetrafluorethylenwachse), zugesetzt oder diese nachträglich auf die gedruckten Oberflächen aufgebracht hat. Häufig führt dies zu einem störenden Glanzverlust. Das nachträgliche Aufbringen von Wachs auf das Druckerzeugnis kann auch nicht immer befriedigen, zumal durch diesen zusätzlichen Verfahrensschritt die Fertigungskosten erhöht werden. Auch werden hohe Einsatzkonzentrationen benötigt, um eine Verbesserung der Kratzfestigkeit zu erzielen. Eine signifikante Release-Wirkung wird so nicht erzielt.

Ähnlich wie in lufttrocknenden oder forciert (Temperatur) trocknenden Systemen werden heute auch Siliconöle oder auch organisch modifizierte Siloxane, wie z. B. Polyethersiloxane, zu diesen Zwecken eingesetzt. Diese werden jedoch bei der strahlungsinduzierten Vernetzungsreaktion nicht chemisch in den Film eingebaut, so daß diese Zusätze aufgrund ihrer Inkompatibilität mit der Zeit an der Oberfläche ausschwimmen, und das Silicon zum einen zum Beispiel bei erneuten Druckprozessen an Stellen gelangen kann, an denen es störend wirkt, und zum anderen der Effekt der verbesserten Kraftzfestigkeit bestenfalls temporärer Natur ist. Insbesondere ist nicht gänzlich zu vermeiden, daß bei Stapelvorgängen das Siliconadditiv an die Rückseite des darüberliegenden Druckerzeugnisses gelangt.

In der Verpackungsindustrie ist darüber hinaus darauf zu achten, daß durch den Additivzusatz dem Druckerzeugnis in möglichst kurzer Zeit ein Release-Effekt verliehen wird, so daß aufgeklebte Etiketten oder Codierungen nachträglich ohne Beschädigung des Druckerzeugnisses entfernt werden können.

Es besteht daher in der Praxis ein Bedarf an vernetzbaren, modifizierten Siliconzusatzmitteln, welche in geringen Konzentrationen die Handhabbarkeit von insbesondere serienmäßig bedruckten Gegenständen verbessern,

wobei diese Zusatzmittel insbesondere die Kratzfestigkeit der frischen Oberflächen verbessern, deren Gleitfähigkeit erhöhen, sehr rasch nach Vernetzung eine hohe Release-Wirkung aufweisen und aufgrund ihrer Vernetzung stationär im Film verbleiben. Dabei sollen derartige Zusatzmittel von der Art und Zusammensetzung der Druckfarbe, der sie zur Verbesserung der vorgenannten Eigenschaften zugesetzt werden, weitgehend unabhängig und universell anwendbar sein. Diese Additive sollen in möglichst geringen Mengen wirksam sein und die anwendungstechnischen Eigenschaften der Druckfarbe nicht verschlechtern. Sie sollen insbesondere nicht die Ausbildung des Oberflächenfilmes und die Aushärtung der Druckfarbe beeinträchtigen. Sie dürfen ferner keinen nachteiligen Effekt auf die Stabilität der Druckfarbe haben und dürfen die Verlaufeigenschaften nicht verschlechtern.

Der Erfindung liegt nun die Aufgabe zugrunde, Verbindungen zu finden, die diese vorgenannten Anforderungen erfüllen und in geringer Zusatzmenge wirksam sind.

Diese Aufgabe wird erfindungsgemäß gelöst durch strahlenhärtende Druckfarben, die Organopolysiloxane der allgemeinen Formel

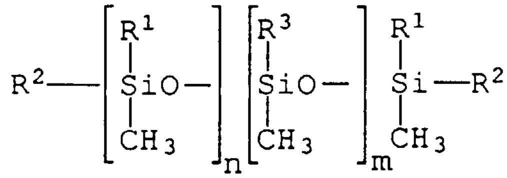

wobei

$R^1$ = ein Alkylrest mit 1 bis 8 Kohlenstoffatomen,
$R^2$ = eine Gruppe der Formel

$$-CH_2-CH_2-OCO-R-(OCO-CH=CH_2)_{x-1}$$

und/oder

$$-CH=CH-OCO-R-(OCO-CH=CH_2)_{x-1}$$

worin x eine ganze Zahl ist und mindestens 2, vorzugsweise 2 bis 15, beträgt,
und R ein gegebenenfalls Alkoxygruppen aufweisender Kohlenwasserstoffrest ist,

$R^3$ = $R^1$ oder $R^2$,
n = 30 bis 150,
m = 0 bis 3 ist,

in Mengen von 0,01 bis 3 Gew.-%, bezogen auf die gesamte Farbenformulierung, enthalten.

Die Herstellung derartiger Siloxane ist in der DE-A-43 31 608 beschrieben. Sie werden erhalten durch direkte Addition von Polyacrylaten der allgemeinen Formel

$$R-(OCO-CH=CH_2)_x$$

an die entsprechenden Wasserstoffsiloxane unter 1,2-Addition bzw. dehydrierender 1,2-Addition, wobei Rhodiumkatalysatoren eingesetzt werden.

Dabei kann R ein Alkylrest mit 2 bis 25 C-Atomen sein, der linear oder verzweigt ist.

$R^1$ ist vorzugsweise ein Methylrest. $R^1$ kann jedoch auch die Bedeutung eines Alkylrestes mit bis zu 8 Kohlenstoffatomen haben. Die Alkylreste mit 3 bis 8 Kohlenstoffatomen können verzweigt sein, jedoch sind die geradkettigen Alkylreste bevorzugt.

Beispiele geeigneter organischer Acrylate sind (EO = $C_2H_4O$-; m, n, o, p und q können Zahlenwerte von 1 bis 40 sein):

a) Diacrylate

| | |
|---|---|
| $CH_2=CH-COO-(CH_2)_n-OCO-CH=CH_2$ | Alkyldioldiacrylat |
| $CH_2=CH-COO-(CH_2-CRR'-CH_2)_n-OCO-CH=CH_2$ | verzweigtes Alkyldioldiacrylat |
| $CH_2=CH-COO-(EO)_m(CH_2)_n(EO)_oOCO-CH=CH_2$ | ethoxyliertes Alkyldioldiacrylat |
| $CH_3$<br>\|<br>$CH_2=CH-COO-(CH-CH_2-CH_2)_n-OCO-CH=CH_2$ | |
| $CH_2=CH-CO-(OCH_2-CH_2)_n-OCO-CH=CH_2$ | (Poly)ethylenglykoldiacrylat |
| $CH_3$<br>\|<br>$CH_2=CH-CO-(O-CH_2-CH)_n-OCO-CH=CH_2$ | (Poly)propylenglykoldiacrylat |

$CH_2=CH-CO-(OCH_2-CH_2-CH_2-CH_2)_n-OCO-CH=CH_2$ (Poly)butylenglykol-diacrylat

$CH_2=CH-COO-(C_6H_4-CRR'-C_6H_4)_n-OCO-CH=CH_2$ substituiertes Bisphenol-A-Derivat

b) Triacrylate

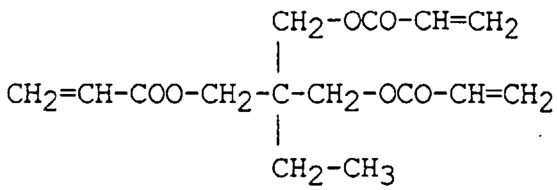

Trimethylolpropantriacrylat (TMPTA)

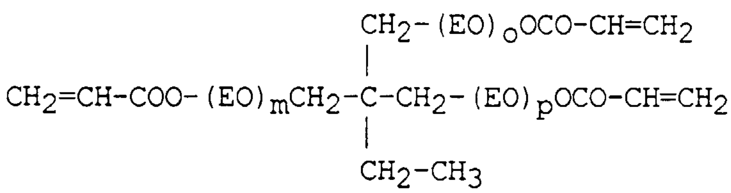

ethoxyliertes Trimethylolpropantriacrylat

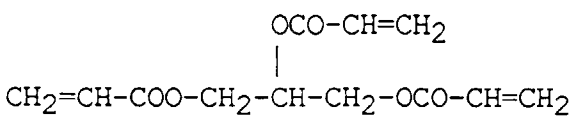

Glycerintriacrylat

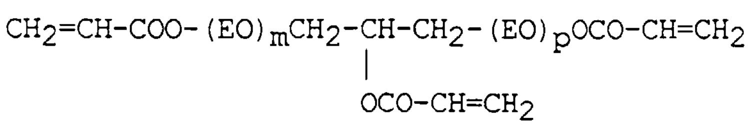

ethoxyliertes Glycerintriacrylat

c) Tetraacrylate

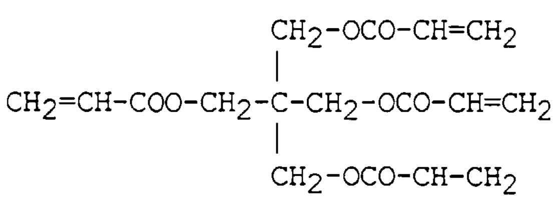

Pentaerythrittetraacrylat

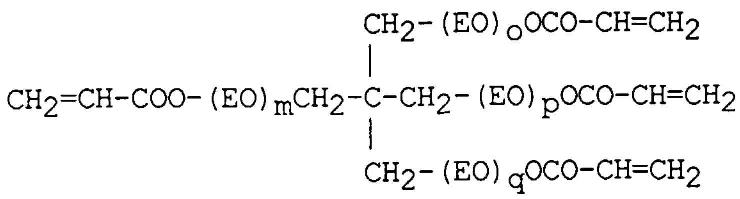

ethoxyliertes Pentaerythrittetraacrylat

d) Multifunktionelle Acrylate

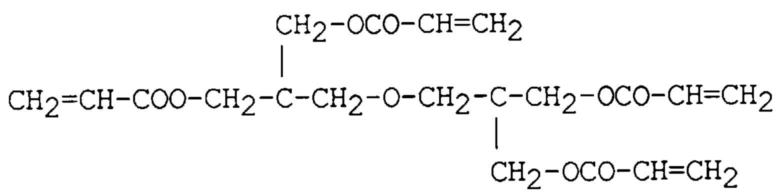

Di(trimethylolpropan)tetraacrylat

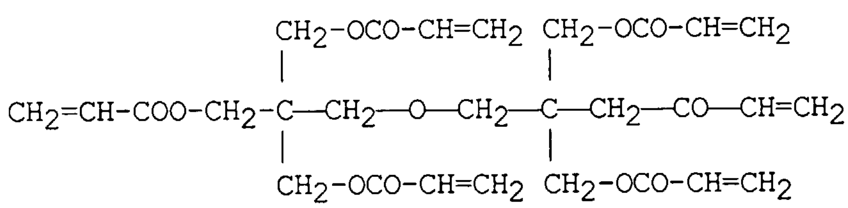

Di(pentaerythrit)hexaacrylat

Bevorzugt addiert man als Acrylatgruppen enthaltende Verbindungen Acrylsäureester zwei- bis sechswertiger aliphatischer geradkettiger oder verzweigter Alkohole an die SiH-Gruppe des Organopolysiloxans.

Besonders bevorzugt addiert man als Acrylatgruppen enthaltende Verbindungen 1,6-Hexandiolacrylat, Neopentylglycoldiacrylat, Tetraethylenglycoldiacrylat, Polypropylenglycoldiacrylat, Tetraethylenglycoldiacrylat, Glycerintriacrylat, Trimethylolpropantriacrylat oder Pentaerythrittetraacrylat an das Organopolysiloxan.

Als Rhodiumkatalysatoren verwendet man vorzugsweise solche Katalysatoren, welche aus der Gruppe $RhX_3 . xH_2O$, $RhX_3(SR^3{}_2)_3$, $RhX(R^3{}_3P)_3$, $RhX(CO)(R^3{}_3P)_3$, $RhH(R^3{}_3P)_4$, $RhR^4{}_3$, $Rh(CO)_2R^4$, $[RhX(Olefin)]_2$ ausgewählt sind, wobei

| | |
|---|---|
| X | ein Halogenrest, vorzugsweise der Chlorrest, |
| $R^3$ | ein Alkylrest mit 1 bis 20 Kohlenstoffatomen, ein Alkenylrest mit 2 bis 20 Kohlenstoffatomen oder der Rest $R^3{}_3SiQ$ (Q = zweiwertiger aliphatischer Rest mit 1 bis 6 Kohlenstoffatomen), |
| $R^4$ | der 2,4-Pentandionatorest, |
| Olefin | Cyclooctadien oder Norbornadien und |
| x | eine Zahl von 0 bis 4 ist. |

Besonders bevorzugt führt man die Hydrosilylierung in Gegenwart eines der folgenden Rhodiumkatalysatoren $RhCl(Ph_3P)_3$ (Ph = Phenyl), $RhCl_3.3H_2O$, [RhCl $[RhCl(Ethylen)_2]_2$ oder $[RhCl(Cyclooctadien)]_2$ durch.

Von wesentlicher Bedeutung für die Eigenschaften der Verbindungen sind die Zahlenwerte der Indices n und m. n gibt die Anzahl der Methylalkylsiloxyeinheiten an und bestimmt die Kettenlänge der Polymere. n hat bei den erfindungsgemäß zu verwendenden Verbindungen einen Zahlenwert von 30 bis 150. Es ist dem Fachmann geläufig, daß die Verbindungen in Form eines Gemisches mit einer im wesentlichen durch statistische Gesetze geregelten Verteilung vorliegen. Der Wert von n stellt deshalb den Mittelwert der Anzahl der Methylalkylsiloxyeinheiten dar. m hat einen Wert von 0 bis 3, vorzugsweise von 0 bis 2. Ist m = 0, handelt es sich bei den Verbindungen um lineare Siloxane, welche endständig über eine Brückengruppierung Acrylatgruppen tragen. Es hat sich gezeigt, daß diese Struktur der Polymere für das Zustandekommen des patentgemäßen Effektes von entscheidender Bedeutung ist.

Beispiele erfindungsgemäß zu verwendender Verbindungen sind:

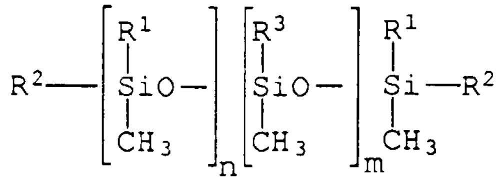

a)

n = 70, m = 0, $R^1$ = $-CH_3$,
$R^2$ = $-CH_2-CH_2-COO-CH_2-C(CH_2OCO-CH=CH_2)_3$ oder $-CH=CH-COO-CH_2-C(CH_2OCO-CH=CH_2)_3$

b)

n = 60, m = 2, $R^1$ = $-CH_3$, $R^3$ = $R^2$

$R^2$ = 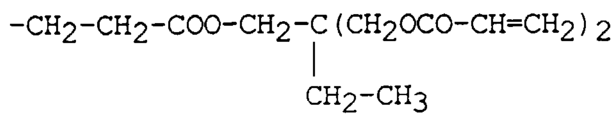

oder

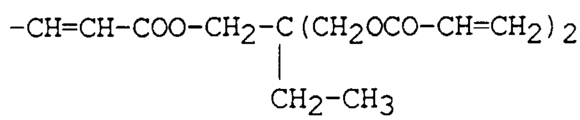

c)

n = 100, m = 0, $R^1$ = $-CH_3$,
$R^2$ = $-CH_2-CH_2-COO-CH_2-C(CH_2OCO-CH=CH_2)_3$ oder $-CH=CH-COO-CH_2-C(CH_2OCO-CH=CH_2)_3$

Die erfindungsgemäß zu verwendenden Verbindungen werden den Druckfarben in Mengen von 0,01 bis 3 Gew.-%, bezogen auf Druckfarbe, zugesetzt.

<u>Beispiel 1</u>

72,7 g (0,1 Mol, 0,2 val SiH) eines endständig SiH-funktionalisierten Polydimethylsiloxans der mittleren Gesamtkettenlänge N = 8 und der allgemeinen Formel $HMe_2SiO(SiMe_2O)_8SiMe_2H$ werden mit 19,2 mg (= 20 ppm Rh) Chlorotris(triphenylphosphin)rhodium(I) $[RhCl(PPh_3)_3$ sowie 20 mg Phenothiazin in einem 250-ml-Vierhalskolben, ausgestattet mit Rührer, Tropftrichter, Thermometer und Rückflußkühler, vorgelegt und unter Rühren auf 80 °C aufgeheizt. Bei dieser Temperatur werden 70,4 g (0,2 Mol, 0,8 val C=C) Pentaerythritoltetraacrylat (PETTA, Sartomer 295) innerhalb von 30 Minuten zugetropft. Nach beendeter Zugabe wird die Reaktionsmischung noch solange weiter bei 80 °C gerührt, bis nach ca. 5 Stunden ein Umsatz von > 99 % erreicht ist. Als Umsatzkontrolle dient dabei die stündliche SiH-Wertbestimmung.

Dann wird die Reaktion abgebrochen und die Katalysatorreste aus der Reaktionsmischung durch Filtration entfernt. Durch Destillation im Ölpumpenvakuum werden flüchtige Nebenprodukte entfernt. Das flüssige Reaktionsprodukt weist eine Viskosität von ca. 1650 mPas (25 °C) auf und kann, wie analytische Untersuchungen mittels $^1H$-, $^{13}C$- und $^{29}Si$-NMR zeigen, mittels der nachfolgenden Formel I beschrieben werden:

$$R^*Me_2SiO(SiMe_2O)_8SiMe_2R^* \qquad \text{(Formel I)}$$

mit

```
                        CH2-O(C=O)-CH=CH2
                        |
R*=   -CH2-CH2-COO-C-CH2-OCO-CH=CH2     (ß-Additionsprodukt)
                        |
                        CH2-OCO-CH=CH2
```

bzw. mit

```
                  CH2-OCO-CH=CH2
                  |
R*= -CH=CH-COO-C-CH2-OCO-CH=CH2((E)-3-Silylpropenoat)
                  |
                  CH2-OCO-CH=CH2
```

Das Verhältnis von β-Additionsprodukt ["SiC"] zu ((E)-3-Silylpropenoat) ["SiVi"]-Additionsprodukt beträgt dabei ca. 3,0 : 1.

14,3 g des so hergestellten Reaktionsproduktes (Verbindung 6 im AT-Test) (0,01 Mol) werden mit 44,5 g Dekamethylcyclopentasiloxan (0,12 Mol) und 0,17 g (0,3 Gew.-%) Trifluormethansulfonsäure 6 Stunden lang unter einer Stickstoffatmosphäre bei 100 °C gerührt. Während des Abkühlens der Reaktionsmischung werden 2,0 g Natriumcarbonat und 0,4 g destilliertes Wasser hinzugegeben und solange gerührt, bis eine Prüfung der Mischung auf Säurespuren negativ ausfällt. Nach dem Filtrieren werden die flüchtigen Bestandteile bei 80 °C und 2 Torr destillativ entfernt. Es werden 53 g (entsprechend 90 % der Theorie) eines weißen leicht trüben Produktes (Verbindung 1 im AT-Test) mit einer Viskosität von 1800 mPas erhalten, das gemäß der analytischen Untersuchung mittels NMR-Spektroskopie eine mittlere Kettenlänge von 70 und in der Gelpermeationschromatographie (GPC) einen gleichmäßigen Peak für eine monomodale Molekulargewichtsverteilung aufweist und durch die Formel $R{*}Me2SiO(SiMe_2O)68SiMe2R{*}$ (Formel II) beschrieben werden kann.

Beispiel 2

In analoger Weise wie in Beispiel 1 beschrieben, werden weitere acrylatfunktionelle Siloxane hergestellt, indem funktionelle Polydimethylsiloxancopolymere unterschiedlichster Kettenlängenverteilungen entweder mit terminalen und/oder lateralen SiH-Gruppen mit den multifunktionellen Acrylaten Pentaerythritoltetraacrylat (PETTA) oder Trimethylolpropantriacrylat (TMPTA) in einer Rhodium-katalysierten Hydrosilylierungsreaktion miteinander umgesetzt werden. Anschließend werden diese Produkte gegebenenfalls mit Siloxancyclen auf weitere diverse Zielkettenlängen equilibriert und hinsichtlich ihres SiC/SiVi-Verhältnisses charakterisiert.

Im folgenden werden die anwendungstechnischen Eigenschaften verschiedener erfindungsgemäß zu verwendender Verbindungen gezeigt.

Zur Überprüfung der anwendungstechnischen Eigenschaften werden die folgenden Druckfarbenrezepturen ausgewählt (Mengenangaben in Gew.-%):

| Rezeptur 1: | | |
|---|---|---|
| Setacure 567 | 15,3 Teile | aromat. Urethanacrylat, Akzc |
| Setacure 576 | 52,6 Teile | aliph. Urethanacrylat, Akzo |

(fortgesetzt)

| Rezeptur 1: | | |
|---|---|---|
| Tripropylenglycoldiacrylat | 10,1 Teile | |
| Heliogen Blue 7080 D | 6,0 Teile | Phthalocyaninpigment, BASF |
| Quantacure ITX | 7,5 Teile | Photoinitiator, Ciba Geigy |
| Quantacure EPD Additiv | 7,5 Teile | Photoinitiator, Ciba Geigy |
| erfindungsgemäß | 1,0 Teile | |

| Rezeptur 2: | | |
|---|---|---|
| Laromer LR 8946 X | 41,2 Teile | aminomod. Oligoetheracrylat, BASF |
| Laromer LR 8869 | 34,8 Teile | Polyetheracrylat, BASF |
| Laromer LR 8899 X | 4,7 Teile | Polyesteracrylat, BASF |
| Heliogen Blue 7080 D | 11,0 Teile | Phthalocyaninpigment, BASF |
| Quantacure ITX | 3,7 Teile | Photoinitiator, Ciba Geigy |
| Lucirin TPO | 1,8 Teile | Photoinitiator, BASF |
| Esacure TZT Additiv | 1,8 Teile | Photoinitiator |
| erfindungsgemäß | 1,0 Teile | |

Die Druckfarben werden auf übliche Weise gemäß den vorstehenden Rezepturen formuliert. Als letzter Rezepturbestandteil werden jeweils die Additive hinzugegeben, wobei die Einarbeitung mittels einer Perlmillscheibe eine Minute bei 2500 U/min erfolgt.

Die Druckfarben werden 12 µm naß auf coronavorbehandelter PVC-Folie aufgerakelt. Die Härtung erfolgt durch Einwirkung von ultraviolettem Licht (UVH) mit 120 W/cm mit Bahngeschwindigkeiten von 20 m/min. Dieser Vorgang wird jeweils einmal wiederholt.

Für die Ermittlung der Trennwerte wird ein 25 mm breites Klebeband der Firma Beiersdorf verwendet, welches mit Kautschukkleber beschichtet ist und im Handel unter der Bezeichnung Tesa 4154 erhältlich ist. Zur Messung der Abhäsivität wird 5 Minuten respektive 24 Stunden nach Härtung der Druckfarbe dieses Klebeband mit 70 $g/cm^2$ aufgewalzt. Nach dreistündiger Lagerung bei Raumtemperatur wird die Kraft gemessen, die benötigt wird, um das jeweilige Klebeband mit einer Geschwindigkeit von 12 mm/s unter einem Schälwinkel von 180° vom Untergrund abzuziehen. Diese Kraft wird als Trennwert/Release-Wert bezeichnet. Kratzfestigkeit ist die Widerstandsfähigkeit einer Oberfläche gegenüber sichtbaren, linienförmigen Beschädigungen durch sich bewegende, die Oberfläche berührende, harte Körper. Zur Messung sogenannter Kratzwerte dient ein speziell umgebautes elektromotorisches Filmaufziehgerät. Auf der beweglichen Rakelhalterung ist anstelle des eingelegten Filmziehrakels eine Platte montiert, die am anderen Ende des Gerätes auf Rollen liegt. Mit Hilfe der Rakelhalterung kann die Platte, auf der das Substrat (mit Druckfarbe beschichteter Film) befestigt wird, bewegt werden. Um die Kratzbeanspruchung zu simulieren, wird ein Klotz mit drei Spitzen auf den Druckfarbfilm gesetzt und mit 500 g beschwert. Die auf der Platte befindliche Prüffolie wird mit einer Geschwindigkeit von 12 mm/s unter dem Gewicht weggezogen. Die hierfür notwendige, vertikale Kraft wird gemessen und als Kratzwert bezeichnet. Die Ermittlung der Kratzwerte erfolgt jeweils 24 Stunden nach Aushärtung der Farben.

Ersetzt man den mit Spitzen versehenen Klotz durch einen Klotz mit flächiger Filzunterlage und verfährt man wie zuvor beschrieben, so mißt man als Reibungskraft den sogenannten Gleitwert. Auch diese Prüfungen erfolgen jeweils 24 Stunden nach Aushärtung der Farben.

Die zu überprüfenden Verbindungen 1 bis 7 entsprechen der allgemeinen Formel I. Dabei haben die Reste $R^1$, $R^2$, $R^3$ und die Indices n und m die in den Tabellen 1 und 2 gezeigten Bedeutungen bzw. Werte.

Tabelle 1:

| (Rezeptur 1) | | | | | | | | | | | |
|---|---|---|---|---|---|---|---|---|---|---|---|
| Verbin dung | Konz. in % | $R^1$ | $R^2$ | $R^3$ | n | m | Verhältnis SiC/SiVi | Gleitwert | Kratzwert | Trennwert n. 5 min | Trennwert n. 24 h |
| 1 | 1 | Me | PETTA Me | | 70 | 0 | 3 | 61 | 48 | 10 | 7 |
| 2 | 1 | Me | TMPTA Me | | 60 | 2 | 3 | 68 | 55 | 13 | 9 |
| 3 | 1 | Me | PETTA Me | | 100 | 0 | 3 | 55 | 46 | 11 | 7 |
| 4 | 1 | Me | PETTA Me | | 70 | 0 | 1 | 90 | 70 | 45 | 32 |
| 5 | 1 | Me | PETTA Me | | 70 | 6 | 1 | 120 | 108 | 70 | 56 |
| 6 | 1 | Me | PETTA Me | | 10 | 0 | 3 | 130 | 125 | 140 | 95 |
| 7 | 1 | Me | TMPTA Me | | 70 | 6 | 1 | 140 | 111 | 125 | 98 |
| Blind | | | | | | | | 280 | 290 | Abriß >700 | Abriß >700 |

Tabelle 2:

(Rezeptur 2)

| Verbindung | Konz. in % | $R^1$ | $R^2$ | $R^3$ | n | m | Verhältnis SiC/SiVi | Gleitwert | Kratzwert | Trennwert n. 5 min | Trennwert n. 24 h |
|---|---|---|---|---|---|---|---|---|---|---|---|
| 1 | 1 | Me | PETTA Me | | 70 | 0 | 3 | 54 | 51 | 14 | 9 |
| 2 | 1 | Me | TMPTA Me | | 60 | 2 | 3 | 65 | 58 | 17 | 13 |
| 3 | 1 | Me | PETTA Me | | 100 | 0 | 3 | 49 | 43 | 10 | 9 |
| 4 | 1 | Me | PETTA Me | | 70 | 0 | 1 | 100 | 82 | 32 | 29 |
| 5 | 1 | Me | PETTA Me | | 70 | 6 | 1 | 111 | 103 | 65 | 61 |
| 6 | 1 | Me | PETTA Me | | 10 | 0 | 3 | 124 | 137 | 108 | 87 |
| 7 | 1 | Me | TMPTA Me | | 70 | 6 | 1 | 156 | 138 | 113 | 91 |
| Blind | | | | | | | | 315 | 305 | Abriß >700 | Abriß >700 |

## Patentansprüche

**1.** Strahlenhärtende Druckfarben, die Organopolysiloxane der allgemeinen Formel

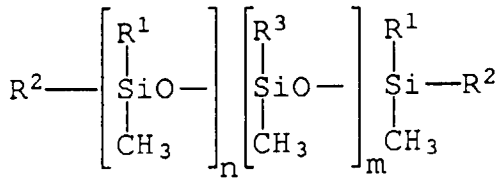

wobei

$R^1$ = ein Alkylrest mit 1 bis 8 Kohlenstoffatomen,
$R^2$ = eine Gruppe der Formel

$$-CH_2-CH_2-OCO-R-(OCO-CH=CH_2)_{x-1}$$

und/oder

$$-CH=CH-OCO-R-(OCO-CH=CH_2)_{x-1}$$

worin x eine ganze Zahl ist und mindestens 2, vorzugsweise 2 bis 15, beträgt, und R ein gegebenenfalls Alkoxygruppen aufweisender Kohlenwasserstoffrest ist,
$R^3$ = $R^1$ oder $R^2$,
n = 30 bis 150,
m = 0 bis 3, vorzugsweise 0 ist,

in Mengen von 0,01 bis 3 Gew.-%, bezogen auf Lackformulierung, enthalten.

**2.** Druckfarben gemäß Anspruch 1, dadurch gekennzeichnet, daß der Rest

$$R^2 = -CH_2-CH_2-COO-CH_2-C(CH_2OCO-CH=CH_2)_3 \text{ oder}$$

$$-CH=CH-COO-CH_2-C(CH_2OCO-CH=CH_2)_3$$

ist.

**3.** Druckfarben gemäß Anspruch 1, dadurch gekennzeichnet, daß der Rest

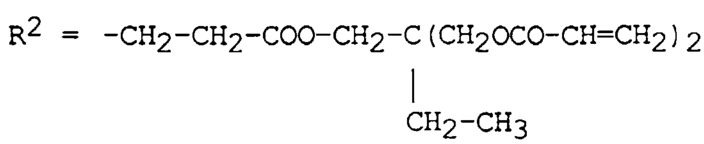

oder

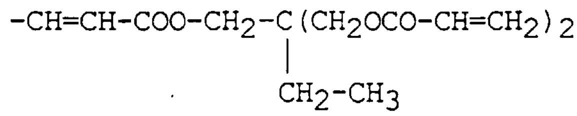

ist.

## Claims

**1.** Radiation-curing printing inks which comprise organopolysiloxanes of the general formula

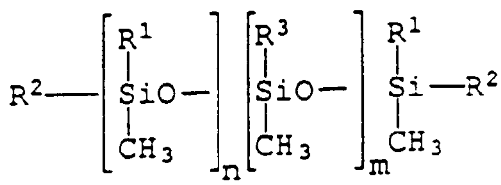

in which

$R^1$ = an alkyl radical having 1 to 8 carbon atoms,
$R^2$ = a group of the formula

$$-CH_2-CH_2-OCO-R-(OCO-CH=CH_2)_{x-1}$$

and/or

$$-CH=CH-OCO-R-(OCO-CH=CH_2)_{x-1}$$

in which x is an integer and is at least 2, preferably 2 to 15, and R is a hydrocarbon radical which optionally has alkoxy groups,

$R^3$ = $R^1$ or $R^2$,
n = 30 to 150,
m = 0 to 3, preferably 0,

in quantities of from 0.01 to 3% by weight, based on coating formulation.

**2.** Printing inks according to Claim 1, characterized in that the radical

$$R^2 = -CH_2-CH_2-COO-CH_2-C)CH_2OCO-CH=CH_2)_3 \text{ or}$$

$$-CH=CH-COO-CH_2-C(CH_2OCO-CH=CH_2)_3$$

**3.** Printing inks according to Claim 1, characterized in that the radical

$R^2$ = 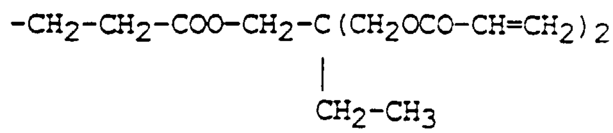

or

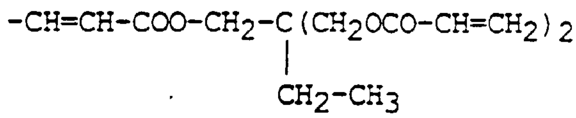

**Revendications**

1. Encres d'impression durcissables par irradiation, contenant des organopolysiloxanes de formule générale

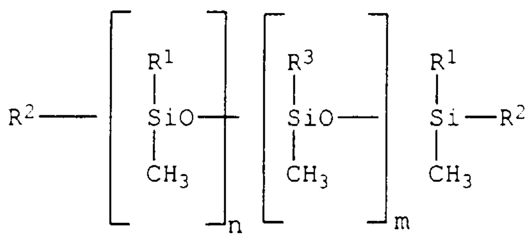

dans laquelle

$R^1$ = un radical alkyle avec 1 à 8 atomes de carbone;
$R^2$ = un groupement de formule

$$-CH_2-CH_2-OCO-R-(OCO-CH=CH_2)_{x-1}$$

et/ou

$$-CH=CH-OCO-R-(OCO-CH=CH_2)_{x-1}$$

dans laquelle x est un nombre entier et vaut au moins 2, de préférence 2 à 15, et R est un radical hydrocarboné présentant éventuellement des groupements alkoxy,
$R^3$ = $R^1$ ou $R^2$,
n = 30 à 150, et
m = 0 à 3, de préférence 0,

en des quantités de 0,01 à 3% en poids, sur la base de la formulation de vernis.

2. Encres d'impression suivant la revendication 1, caractérisées en ce que le radical $R^2$ est

$$-CH_2-CH_2-COO-CH_2-C(CH_2OCO-CH=CH_2)_3$$

ou

$-CH=CH-COO-CH_2-C(CH_2OCO-CH=CH_2)_3.$

3. Encres d'impression suivant la revendication 1, caractérisées en ce que le radical $R^2$ est

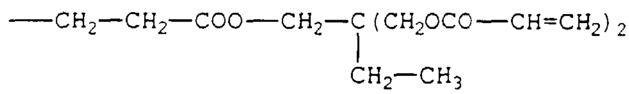

ou